# EUROPÄISCHE PATENTSCHRIFT

(11) **EP 4 013 582 B1**
(45) Veröffentlichungstag und Bekanntmachung des Hinweises auf die Patenterteilung: **04.10.2023**
(21) Anmeldenummer: 20757319.7
(22) Anmeldetag: 14.08.2020
(51) Int. Cl.: B27D 1/04, B27N 1/00, B27N 3/04, B27N 3/18, B27N 7/00, B32B 37/12

(54) **MEHRSCHICHTIGER HOLZKOMPOSITBLOCK, MEHRSCHICHTIGES HOLZFURNIER SOWIE VERFAHREN ZUR HERSTELLUNG DERSELBEN**
MULTI-LAYER WOOD COMPOSITE BLOCK, MULTI-LAYER WOOD VENEER, AND METHOD FOR THE PRODUCTION THEREOF
BLOC COMPOSITE DE BOIS MULTICOUCHE, PLACAGE DE BOIS MULTICOUCHE ET PROCÉDÉ DE PRODUCTION ASSOCIÉ

(30) Priorität: 16.08.2019 DE 102019122037
(43) Veröffentlichungstag der Anmeldung: 22.06.2022
(73) Patentinhaber: Fritz Kohl GmbH & Co. KG, 97753 Karlstadt (DE)
(72) Erfinder: ROMBACH, Georg, 97776 Eussenheim (DE)
(74) Vertreter: Aera A/S
(86) Internationale Anmeldenummer: PCT/EP2020/072880
(87) Internationale Veröffentlichungsnummer: WO 2021/032626

(56) Entgegenhaltungen:
- EP-A1- 2 310 196
- DE-A1- 4 010 648
- DE-A1-102020 115 706
- DE-U1-202009 013 059
- US-B2- 9 957 420

## Beschreibung

Die Erfindung betrifft einen mehrschichtigen Holzkompositblock, ein mehrschichtiges Holzfurnier sowie Verfahren zur Herstellung derselben. Weiterhin betrifft die Erfindung die Verwendung des mehrschichtigen Holzfurniers als Dekor- und/oder Verkleidungselement, insbesondere in einem Fahrzeuginnenraum, sowie Artikel, die das mehrschichtige Holzfurnier umfassen.

Mehrschichtige Holzfurniere, die aus mehrschichtigen Holzkompositblöcken erhalten werden, sind bekannt.

DE 60 2005 001 689 T2 befasst sich mit einem Verfahren zur Herstellung eines Furniers. Hierbei werden Holzblöcke nach längerem Erhitzen und Wässern zu Furnier mit einer Stärke von etwa 0,65 mm gemessert. Als geeignete Klebstoffe werden unter anderem feuchtigkeitsaushärtende, thermische Polyurethanklebstoffe genannt.

Das in DE 1 086 425 B dargelegte Verfahren zur Herstellung veredelter Holzfurniere kann wahlweise das Messern oder das Rundschälen eines mehrschichtigen, verleimten Holzblocks zu einzelnen Furnieren beinhalten.

In der EP 2 310 196 B1 werden ein mehrschichtiger Holzblock, daraus erhältliche Furniere sowie Verfahren zu deren Herstellung beschrieben.

Die DE 10 2017 113 764 B4 offenbart ein Verfahren zur Herstellung eines Holzfurniers und eines Furnierblocks, sowie ein Verfahren zur Herstellung eines Formteils. Die Furnierblöcke werden unter Verwendung eines Klebers hergestellt und anschließend zu Furnieren gemessert.

Die DE 10 2015 009 012 B3 offenbart ein Verfahren zur Herstellung eines Furniers, wobei das Verfahren das Abtrennen von Furnierblättern mittels einer Furniermessermaschine umfasst.

Die DE 20 2009 013059 U1 zeigt eine Verbundplatte, die holzhaltige Elemente und ein in die Elementzwischenräume eingefülltes verfestigtes Material aufweist, dadurch gekennzeichnet, dass die holzhaltigen Elemente in einer Ebene angeordnet sind und auf mindestens einer der oberen und der unteren Oberfläche der Verbundplatte die holzhaltigen Elemente und das Material flächenbündig vorliegen. Die US 9 957 420 B2 zeigt einen Verbund von Formkörpern aus Holzwerkstoffen mit folienförmigen Substraten. Die DE 40 10 648 A1 zeigt eine mehrschichtige laminierte Folie.

Aus wirtschaftlichen Gründen werden Holzfurniere vorzugsweise mittels Messern hergestellt. Die Methode ist materialsparend und liefert Furniere mit einer Stärke zwischen 0,3 und 4 mm. Allerdings müssen die Hölzer beziehungsweise Furnierblöcke über einen längeren Zeitraum erhitzt und gewässert werden, um sie für das Messern vorzubereiten. Da diese Vorbehandlung mit Temperatur- und Feuchtigkeitsänderungen einhergeht, die zu einer Verformung, insbesondere Ausdehnung der einzelnen im Furnierblock vorliegenden Holzschichten führt, ist die erreichbare Präzision gemesserter Furniere eingeschränkt. Zudem lässt diese Art der Vorbehandlung eine Verklebung unterschiedlicher Materialen nur bedingt zu, beziehungsweise die Verklebung weist oft nicht die gewünschten Eigenschaften auf. Insbesondere sind Klebstoffe, die einerseits geeignet sind, unterschiedliche Materialien wie beispielsweise Holz, Metalle, Kunststoffe miteinander zu verbinden, und andererseits eine ausreichende Beständigkeit gegenüber Feuchtigkeit und/ oder Hitze während des Wässerns bzw. Dämpfens aufweisen, noch nicht kommerziell verfügbar. Weiterhin kann sich die Vorbehandlung durch Farbveränderungen im Holz bemerkbar machen. Nicht zuletzt kommt es bei Messerfurnieren, wie auch bei rundgeschälten Furnieren, oft zu Rissbildungen im Furnier. Grundsätzlich sind Furniere nur bis zu einer bestimmten Härte des verwendeten Holzes beziehungsweise Holz(komposit)blocks mittels Messern zugänglich; insbesondere Eisenholz, das heißt verschiedene Tropenhölzer, lässt sich nicht zu Furnieren messern, sondern kann nur noch per Säge bearbeitet werden.

Mehrschichtige Sägefurniere sind ebenfalls aus dem Stand der Technik bekannt. Das Sägen von Holz(komposit)blöcken zu Furnieren stellt die ursprünglichste Methode dar. Ein Nachteil des Sägens liegt im vergleichsweise großen Materialverlust, der unter anderem von der Dicke des verwendeten Sägeblattes abhängig ist. Insgesamt ist das Sägen deutlich aufwändiger. Allerdings behalten Sägefurniere ihre Farbe und sind weitestgehend rissfrei, da sie nicht zwingend gewässert/ bedampft und anschließend wieder getrocknet werden müssen, sondern direkt trocken gesägt werden können. Sägefurniere sind in der Regel mit einer Stärke von 1 mm oder mehr herstellbar und werden hauptsächlich für hochwertige und hochbeanspruchte Werkstücke, z.B. im Möbelbau oder für Fussbodenbeläge, verwendet.

Der vorliegenden Erfindung liegt die Aufgabe zugrunde, einen mehrschichtigen Holzkompositblock bereitzustellen, der als Ausgangsmaterial für die Herstellung eines hochpräzisen Furniers mit einer Furnierstärke im Bereich 0,2 bis 4,0 mm geeignet ist. Eine weitere Aufgabe der Erfindung ist die Bereitstellung eines hochpräzisen, mehrschichtigen Holzfurniers, welches für Dekor- und/ oder Verkleidungselemente verwendet werden kann.

Die vorliegende Aufgabe ist durch den Holzkompositblock gemäß Anspruch 1, die mehrschichtigen Holzfurniere gemäß Ansprüchen 5 und 13, die Verfahren gemäß den Ansprüchen 9 und 12 sowie die Verwendung gemäß Anspruch 14 und durch Artikel gemäß Anspruch 15, gelöst.

Ein erster Aspekt der Erfindung betrifft einen mehrschichtigen Holzkompositblock gemäß Anspruch 1.

Vorteilhafte Ausgestaltungen und Weiterbildungen sind in den jeweils abhängigen Ansprüchen angegeben.

Der erfindungsgemäße, mehrschichtige Holzkompositblock ist mittels Sägen oder Messern bearbeitbar, da der Holzkompositblock vorteilhafte Eigenschaften aufweist. Bevorzugt ist der erfindungsgemäße, mehrschichtige Holzkompositblock im trockenen Zustand mittels Sägen oder Messern bearbeitbar, noch bevorzugter mittels Sägen im trockenen Zustand. Falls die ausgehärteten Klebeschichten des Holzkompositblocks zu weich sind, ist ein Sägen nicht mehr möglich, da die Klebeschichten verschmieren und/ oder die gesägten Furniere ihre Form nicht halten. Sind die Klebeschichten jedoch zu hart, so ist ein Sägen nicht mehr möglich und/ oder der Verschleiß der verwendeten Werkzeuge ist enorm. Konkret weisen die Klebeschichten, im ausgehärteten Zustand, eine Härte von bevorzugt mindestens 75 Shore A und/ oder mindestens 24 Shore D, bevorzugter mindestens 80 Shore A und/ oder mindestens 27 Shore D, auf.

Die Messung der Härte, Shore A und Shore D, erfolgt gemäß DIN EN ISO 868.

Im Gegensatz zur Furnierherstellung mittels Messern, entfällt beim Sägen die Vorbehandlung der Holzkompositblöcke, das heißt Temperatur- und/ oder Feuchtigkeitsschwankungen werden vermieden, so dass eine Verformung und/ oder Verfärbung der Blöcke ausbleibt. Somit können gesägte Furniere mit höherer Präzision hergestellt werden. Zum anderen erlaubt die Art des Holzkompositaufbaus und das Herstellen der Furniere durch Sägen Designs, die bei bisher bekannten Verfahren nicht möglich waren.

Grundsätzlich sind alle für das Verleimen von Holz geeigneten Klebstoffe für die Umsetzung der vorliegenden Erfindung geeignet. Da Feuchtigkeitsschwankungen, beziehungsweise ein Aufquellen und/ oder Verziehen des Holzes, vermieden werden sollen, sind wasser- und lösemittelfreie Klebstoffe bevorzugt.

Bevorzugt wird die mindestens eine Klebeschicht mit wasser- und lösemittelfreien Klebstoffen hergestellt. Bei eventuell enthaltenen Restmengen an Wasser und/oder Lösungsmittel handelt es sich um nicht entfernbare Restmengen oder beispielsweise durch die Luftfeuchtigkeit eingetragene Wassermengen.

Eine weitere Rolle spielen die Hafteigenschaften der Klebstoffe. Die Oberflächeneigenschaften wie beispielsweise Polarität und Struktur verschiedener Materialien, das heißt verschiedener Hölzer, aber auch weiterer Materialien, die gegebenenfalls als Zwischenschichten in den mehrschichtigen Holzkompositblock beziehungsweise das mehrschichtige Holzfurnier eingebracht werden, können deutlich voneinander abweichen. Ein entscheidendes Kriterium für die Auswahl geeigneter Klebstoffe ist daher, dass die Klebstoffe auf allen verwendeten Materialien ausreichende Haftung aufweisen.

Als Klebstoffe sind beispielsweise Polyurethane (PUR), Epoxidharze, silanmodifizierte Polymere oder Zweikomponentenkleber, wie zum Beispiel PVAc-Copolymer mit Isocyanat, geeignet. Insbesondere eignen sich Schmelzklebstoffe auf Basis von Polyurethan-Prepolymeren und Epoxidharze.

Besonders bevorzugt sind feuchtigkeitsaushärtende Schmelzklebstoffe auf Basis von Polyurethan-Prepolymeren, welche eine Verarbeitungstemperatur von 100 - 140 °C aufweisen, und/oder welche vor dem Aushärten eine Viskosität von 5000 bis 20000 mPas, bevorzugt von 5000 bis 16000 mPas, bevorzugter von 8000 bis 16000 mPas bei 130°C (Brookfield DV-II+ Thermosel, Spindel 29), aufweisen, und/oder welche vor dem Aushärten eine Dichte von 1,0 bis 1,5 g/cm³, bevorzugt von 1,0 bis 1,3 g/cm³, bevorzugter von 1,1 bis 1,3 g/cm³ aufweisen.

Entsprechend einer bevorzugten Ausführungsform umfasst der Holzkompositblock eine Mehrzahl von Klebeschichten. Das Vorhandensein einer Mehrzahl von Klebeschichten eröffnet einerseits zusätzliche Gestaltungsmöglichkeiten, da jede Klebeschicht immer auch ein Linienelement im Holzkompositblock bildet, andererseits nimmt der Einfluss der Eigenschaften des Klebers - wie zum Beispiel dessen Härte - auf die Bearbeitbarkeit des Holzkompositblocks mit zunehmender Anzahl an Klebeschichten zu.

Sofern der Holzkompositblock eine Mehrzahl unterschiedlicher Schichten umfasst, können diese in unterschiedlicher Art und Weise angeordnet sein; spezielle Anordnungen der einzelnen im Holzkompositblock enthaltenen Schichten können den angefügten Figuren entnommen werden.

Grundsätzlich dienen die Klebeschichten zum Verbinden einer Holzschicht mit einer anderen Holzschicht.

Entsprechend einer weiteren bevorzugten Ausführungsform weist der Holzkompositblock
a) einen Gehalt von leichtflüchtigen Kohlenwasserstoffen (VOC - Volatile Organic Compounds) von weniger oder gleich 100 mg/kg und schwererflüchtigen Kohlenwasserstoffen (FOG - Fogging oder auch SVOC - Semi Volatile Organic Compounds) von weniger oder gleich 250 mg/kg ermittelt gemäß VDA 278,
   und/ oder
b) einen Formaldehydemissionswert von weniger oder gleich 3 mg/kg ermittelt gemäß VDA 275,
   auf.

Die oben genannten Emissionswerte TVOC (Total Volatile Organic Compounds), VOC, FOG und der Formaldehydemissionswert des erfindungsgemäßen Holzkompositblocks können auch, unabhängig voneinander, gleich null sein.

Fachleute unterscheiden zwischen leichtflüchtigen Kohlenwasserstoffen VOC (Volatile Organic Compounds), sehr flüchtigen organischen Verbindungen VVOC (Very Volatile Organic Compounds) und schwererflüchtigen organischen Verbindungen SVOC (Semivolatile Organic Compounds). Die Summe der Konzentrationen sämtlicher flüchtiger Kohlenwasserstoffe ergibt den TVOC-Wert (Total Volatile Organic Compounds).

Der Begriff VOC fasst flüchtige organische Verbindungen zusammen, die einen Siedepunktsbereich von 50-100°C bis 250-260 °C aufweisen. Unter FOG und/ oder SVOC versteht man organische Verbindungen, die einen Siedepunktsbereich von 240 bis 400°C aufweisen und ggf. einen Niederschlag (Schmierfilm) bilden.

Ein Holzkompositblock, der die oben genannten Kriterien hinsichtlich der Emissionstests gemäß VDA 275, 277 und/ oder 278 erfüllt, weist eine geringe Toxizität auf. Ein solcher Holzkompositblock ist somit für verschiedenste Verwendungen geeignet, insbesondere in Innenräumen. Der Holzkompositblock ist beispielsweise zur Herstellung von Dekor- und/ oder Verkleidungselementen insbesondere für einen Fahrzeuginnenraum geeignet.

Bevorzugt weist der Holzkompositblock
a) eine Gesamtkohlenstoffemission (TVOC) von weniger oder gleich 50 µg Kohlenstoff/ g bestimmt gemäß VDA 277,
   und
b) einen Gehalt von leichtflüchtigen Kohlenwasserstoffen (VOC) von weniger oder gleich 100 mg/kg und schwererflüchtigen Kohlenwasserstoffen (FOG) von weniger oder gleich 250 mg/kg bestimmt gemäß VDA 278;
oder
a) eine Gesamtkohlenstoffemission (TVOC) von weniger oder gleich 50 µg Kohlenstoff/ g bestimmt gemäß VDA 277,
   und
c) einen Formaldehydemissionswert von weniger oder gleich 3 mg/kg bestimmt gemäß VDA 275;
   oder
b) einen Gehalt von leichtflüchtigen Kohlenwasserstoffen (VOC) von weniger oder gleich 100 mg/kg und schwererflüchtigen Kohlenwasserstoffen (FOG) von weniger oder gleich 250 mg/kg bestimmt gemäß VDA 278,
   und
c) einen Formaldehydemissionswert von weniger oder gleich 3 mg/kg bestimmt gemäß VDA 275;
   auf.

Bevorzugter weist der erfindungsgemäße Holzkompositblock
a) eine Gesamtkohlenstoffemission (TVOC) von weniger oder gleich 50 µg Kohlenstoff/ g bestimmt gemäß VDA 277,
   und
b) einen Gehalt von leichtflüchtigen Kohlenwasserstoffen (VOC) von weniger oder gleich 100 mg/kg und schwererflüchtigen Kohlenwasserstoffen (FOG) von weniger oder gleich 250 mg/kg ermittelt gemäß VDA 278,
   und
c) einen Formaldehydemissionswert von weniger oder gleich 3 mg/kg bestimmt gemäß VDA 275,
   auf.

Entsprechend einer weiteren bevorzugten Ausführungsform ist die wenigstens eine Klebeschicht einfärbbar und/oder temperaturbeständig bis 180°C, bevorzugt 190°C, bevorzugter 200°C und noch bevorzugter 220°C.

Einfärbbare Klebeschichten erlauben das Unterdrücken potentiell auftretender Vergilbung und/ oder Verhindern das Ein- bzw. Durchdringen von Licht. Im Fall von unter Verwendung eines schwarzen Pigments eingefärbten Klebeschichtensind beispielsweise potentiell vorhandene Vergilbungseffekte nicht mehr sichtbar. Zudem eröffnen einfärbbare Klebeschichten zusätzliche Gestaltungsmöglichkeiten, da eine Klebeschicht immer auch ein Linienelement im Holzkompositblock bildet.

Die Temperaturbeständigkeit der Klebeschichten verhindert Vergilbungseffekte, da - auch bei stärkeren, natürlichen Schwankungen der Umgebungstemperatur - keine beziehungsweise nur sehr geringe Mengen an Zersetzungsprodukten in den Klebeschichten vorliegen. Temperaturbeständigkeit umfasst hier allerdings nicht nur die Zersetzung der Klebeschichten, sondern auch ihre Formstabilität; das heißt eine bis 180°C temperaturbeständige Klebeschicht weicht weder auf (schmilzt nicht), noch kommt es zur thermischen Zersetzung der Klebeschicht. Bis 180°C temperaturbeständige Klebeschichten eröffnen zusätzliche Möglichkeiten in Bezug auf Bearbeitungsmethoden.

Bevorzugt ist die mindestens eine Klebeschicht einfärbbar und temperaturbeständig bis 180°C, bevorzugt 190°C, bevorzugter 200°C und noch bevorzugter 220°C, so dass eine potentielle Beeinträchtigung der Optik durch Vergilbung verhindert wird.

Entsprechend einer weiteren bevorzugten Ausführungsform umfasst der Holzkompositblock mindestens eine Zwischenschicht, wobei die mindestens eine Zwischenschicht zwischen zwei Holzschichten angeordnet ist.

Die Verwendung von Zwischenschichten eröffnet zusätzliche Gestaltungsmöglichkeiten, da jede Zwischenschicht immer auch ein Linienelement im Holzkompositblock bildet. Des Weiteren können die Zwischenschichten Einfluss auf die Verarbeitungseigenschaften des Holzkompositblocks haben.

Bevorzugt besteht die mindestens eine Zwischenschicht aus Metall, Textil, Kunststoff, Leder, Vlies, Stein, Filz, gepresstes Papier, Mineralwerkstoff, mitteldichte (Holz-)Faserplatten (MDF), oder Kombinationen daraus.

Geeignetes gepresstes Papier sind beispielsweise die Produkte der Firma richlite (USA).

Innerhalb des erfindungsgemäßen Holzkompositblocks kann die mindestens eine Zwischenschicht derart zwischen zwei Holzschichten angeordnet sein, dass die Zwischenschicht durch eine erste Klebeschicht mit einer ersten Holzschicht und durch eine zweite Klebeschicht mit einer zweiten Holzschicht verbunden ist, das heißt die Zwischenschicht ist in eine Klebeschicht, die zwei Holzschichten miteinander verbindet, eingebettet.

Entsprechend einer bevorzugten Ausführungsform enthält der erfindungsgemäße Holzkompositblock eine Mehrzahl an Zwischenschichten. Sofern der Holzkompositblock eine Mehrzahl von Zwischenschichten umfasst, können diese in unterschiedlicher Art und Weise angeordnet sein. Es können beispielsweise mehrere Zwischenschichten zwischen einer ersten und einer zweiten Holzschicht angeordnet sein. Mögliche Anordnungsvarianten der einzelnen im Holzkompositblock enthaltenen Schichten sind in den angefügten Figuren dargestellt.

Die Dicke einer Schicht kann über den gesamten Bereich der Schicht gleich sein. Die Dicke einer Schicht kann jedoch auch variieren; beispielsweise kann eine Schicht einen rechteckigen, keilförmigen, runden oder geschwungenen Querschnitt aufweisen. Grundsätzlich sind Form und Dicke der einzelnen Schichten, beispielsweise abhängig vom gewünschten Design, frei wählbar.

Dies gilt sowohl für die im Holzfurnier enthaltenen Holzschichten, als auch für die Klebeschichten und die - optionalen - Zwischenschichten.

Der Holzkompositblock weist eine Holzfeuchte kleiner gleich 20%, bevorzugt kleiner gleich 18%, bevorzugter kleiner gleich 15%, noch bevorzugter zwischen 6 und 15% auf.

Die Messung der Holzfeuchte erfolgt mittels eines handelsüblichen Messgeräts (Gann Hydromette, H35-M20), welches die Holzfeuchte auf Basis des elektrischen Widerstands ermittelt (DIN EN 13183-2:2002-07 mit DIN EN 13183-2 Berichtigung 1: 2003-12).

Alternativ kann die Holzfeuchte auch mittels Darrprobe bestimmt werden (DIN EN 13183-1:2002-07 mit DIN EN 13183-1 Berichtigung 1: 2003-12).

Ein weiterer Aspekt der Erfindung betrifft ein mehrschichtiges Holzfurnier gemäß Anspruch 5.

Bevorzugt weisen die Klebeschichten, im ausgehärteten Zustand, eine Härte von mindestens 75 Shore A und/ oder mindestens 24 Shore D, bevorzugter mindestens 80 Shore A und/ oder mindestens 27 Shore D, auf.

Die Messung der Härte, Shore A und/ oder Shore D, erfolgt gemäß DIN EN ISO 868.

Die mit der Härte der Klebeschichten korrelierenden technischen Effekte - wie für den erfindungsgemäßen Holzkompositblock beschrieben - sind auch in Bezug auf das mehrschichtige Holzfurnier gültig.

Entsprechend einer bevorzugten Ausführungsform weist das erfindungsgemäße, mehrschichtige Holzfurnier eine Stärke zwischen 0,2 und 4,0 mm, bevorzugt zwischen 0,3 und 1,5 mm, bevorzugter zwischen 0,5 und 1,0 mm und noch bevorzugter zwischen 0,6 und 0,9 mm auf.

Bei Furnierstärken im Bereich kleiner oder gleich 1,5 mm sind die mehrschichtigen Holzfurniere noch ausreichend flexibel um sie, z.B. für Anwendungen als Dekor- und/ oder Verkleidungselemente, insbesondere für Fahrzeuginnenräume, in Form biegen zu können. Gleichzeitig ist der Materialverbrauch bei Furnieren mit einer Stärke kleiner oder gleich 1,5 mm verhältnismäßig gering.

Das erfindungsgemäße Holzfurnier ist bevorzugt hochpräzise gearbeitet, das heißt es weist eine Stärketoleranz von kleiner oder gleich 0,25 mm, bevorzugt kleiner oder gleich 0,20 mm und bevorzugter kleiner oder gleich 0,15 mm, auf.

Entsprechend einer bevorzugten Ausführungsform umfasst das Holzfurnier eine Mehrzahl von Klebeschichten.

Entsprechend einer weiteren bevorzugten Ausführungsform weist das Holzfurnier
a) einen Gehalt von leichtflüchtigen Kohlenwasserstoffen (VOC - Volatile Organic Compounds) von weniger oder gleich 100 mg/kg und schwererflüchtigen Kohlenwasserstoffen (FOG - Fogging oder auch SVOC - Semi Volatile Organic Compounds) von weniger oder gleich 250 mg/kg bestimmt gemäß VDA 278,
   und/ oder
b) einen Formaldehydemissionswert von weniger oder gleich 3 mg/kg bestimmt gemäß VDA 275,
   auf.

Die oben genannten Emissionswerte, TVOC (Total Volatile Organic Compounds), VOC, FOG und der Formaldehydemissionswert des erfindungsgemäßen Holzfurniers können auch, unabhängig voneinander, gleich null sein.

Bevorzugt weist das Holzfurnier
a) eine Gesamtkohlenstoffemission (TVOC) von weniger oder gleich 50 µg Kohlenstoff/ g bestimmt gemäß VDA 277,
   und
b) einen Gehalt von leichtflüchtigen Kohlenwasserstoffen (VOC) von weniger oder gleich 100 mg/kg und schwererflüchtigen Kohlenwasserstoffen (FOG) von weniger oder gleich 250 mg/kg bestimmt gemäß VDA 278;
   oder
a) eine Gesamtkohlenstoffemission (TVOC) von weniger oder gleich 50 µg Kohlenstoff/ g bestimmt gemäß VDA 277,
   und
c) einen Formaldehydemissionswert von weniger oder gleich 3 mg/kg bestimmt gemäß VDA 275;
   oder
b) einen Gehalt von leichtflüchtigen Kohlenwasserstoffen (VOC) von weniger oder gleich 100 mg/kg und schwererflüchtigen Kohlenwasserstoffen (FOG) von weniger oder gleich 250 mg/kg bestimmt gemäß VDA 278,
   und
c) einen Formaldehydemissionswert von weniger oder gleich 3 mg/kg bestimmt gemäß VDA 275;
   auf.

Bevorzugter weist das erfindungsgemäße Holzfurnier
a) eine Gesamtkohlenstoffemission (TVOC) von weniger oder gleich 50 µg Kohlenstoff/ g bestimmt gemäß VDA 277,
   und
b) einen Gehalt von leichtflüchtigen Kohlenwasserstoffen (VOC) von weniger oder gleich 100 mg/kg und schwererflüchtigen Kohlenwasserstoffen (FOG) von weniger oder gleich 250 mg/kg bestimmt gemäß VDA 278,
   und
c) einen Formaldehydemissionswert von weniger oder gleich 3 mg/kg bestimmt gemäß VDA 275,
   auf.

Entsprechend einer weiteren bevorzugten Ausführungsform ist die wenigstens eine Klebeschicht einfärbbar und/oder temperaturbeständig bis 180°C, bevorzugt 190°C, bevorzugter 200°C und noch bevorzugter 220°C, so dass eine potentielle Beeinträchtigung der Optik durch Vergilbung verhindert wird.

Entsprechend einer weiteren bevorzugten Ausführungsform umfasst das Holzfurnier mindestens eine Zwischenschicht, wobei die mindestens eine Zwischenschicht zwischen zwei Holzschichten angeordnet ist.

Bevorzugt besteht die mindestens eine Zwischenschicht aus Metall, Textil, Kunststoff, Leder, Vlies, Stein, Filz, gepresstes Papier, Mineralwerkstoff, mitteldichte (Holz-)Faserplatten (MDF), oder Kombinationen daraus.

Geeignetes gepresstes Papier sind beispielsweise die Produkte der Firma richlite (USA).

Entsprechend einer weiteren bevorzugten Ausführungsform enthält das erfindungsgemäße Holzfurnier eine Mehrzahl an Zwischenschichten.

Innerhalb des erfindungsgemäßen Holzfurniers kann die mindestens eine Zwischenschicht derart zwischen zwei Holzschichten angeordnet sein, dass die Zwischenschicht durch eine erste Klebeschicht mit einer ersten Holzschicht und durch eine zweite Klebeschicht mit einer zweiten Holzschicht verbunden ist, das heißt die Zwischenschicht ist in eine Klebeschicht, die zwei Holzschichten miteinander verbindet, eingebettet.

Sofern das Holzfurnier eine Mehrzahl von Zwischenschichten umfasst, können diese in unterschiedlicher Art und Weise angeordnet sein. Es können beispielsweise mehrere Zwischenschichten zwischen einer ersten und einer zweiten Holzschicht angeordnet sein. Mögliche Anordnungsvarianten der einzelnen im Holzfurnier enthaltenen Schichten sind in den angefügten Figuren dargestellt.

Die Dicke einer Schicht kann über den gesamten Bereich der Schicht gleich sein. Die Dicke einer Schicht kann jedoch auch variieren; beispielsweise kann eine Schicht einen rechteckigen, keilförmigen, runden oder geschwungenen Querschnitt aufweisen. Grundsätzlich sind Form und Dicke der einzelnen Schichten, beispielsweise abhängig vom gewünschten Design, frei wählbar.

Dies gilt sowohl für die im Holzfurnier enthaltenen Holzschichten, als auch für die Klebeschichten und die - optionalen - Zwischenschichten.

Bevorzugt handelt es sich bei dem erfindungsgemäßen, mehrschichtigen Holzfurnier um ein Sägefurnier.

Das Holzfurnier weist eine Holzfeuchte kleiner gleich 20%, bevorzugt kleiner gleich 18%, bevorzugter kleiner gleich 15%, noch bevorzugter zwischen 6 und 15% auf.

Die Messung der Holzfeuchte erfolgt mittels eines handelsüblichen Messgeräts (Gann Hydromette, H35-M20), welches die Holzfeuchte auf Basis des elektrischen Widerstands ermittelt (DIN EN 13183-2:2002-07 mit DIN EN 13183-2 Berichtigung 1: 2003-12).

Alternativ kann die Holzfeuchte auch mittels Darrprobe bestimmt werden (DIN EN 13183-1:2002-07 mit DIN EN 13183-1 Berichtigung 1: 2003-12).

Die mit den oben genannten bevorzugten Ausführungsformen korrelierenden technischen Effekte - wie für den erfindungsgemäßen Holzkompositblock beschrieben - sind auch in Bezug auf das mehrschichtige Holzfurnier gültig.

Ein weiterer Aspekt der Erfindung betrifft ein Verfahren zur Herstellung eines erfindungsgemäßen mehrschichtigen Holzkompositblocks gemäß den Ansprüchen 1 bis 4, umfassend die Schritte:
a) Bereitstellen einer Mehrzahl von trockenen Holzschichten;
b) Trockenverleimen der trockenen Holzschichten miteinander.

Dadurch, dass die Holzschichten während des erfindungsgemäßen Verfahrens zur Herstellung des mehrschichtigen Holzkompositblocks trocken sind und trockenverleimt werden, kann ein durch Feuchtigkeit verursachtes Verformen und/ oder Verfärben der Holzschichten vermieden werden.

Bevorzugt werden die zugeschnittenen, trockenen Holzschichten und/ oder zugeschnittene Zwischenschichten vor dem Trockenverleimen kalibriert und/ oder der ausgehärtete Holzkompositblock wird nach dem Trockenverleimen kalibriert.

Noch bevorzugter werden sowohl die zugeschnittenen, trockenen Holzschichten und/ oder zugeschnittene Zwischenschichten vor dem Trockenverleimen, als auch der ausgehärtete Holzkompositblock nach dem Trockenverleimen, kalibriert.

Die oben gemachten Angaben zum erfindungsgemäßen Holzkompositblock haben entsprechend auch für das Verfahren zur Herstellung des mehrschichtigen Holzkompositblocks Geltung.

Entsprechend einer bevorzugten Ausführungsform werden die einzelnen Holzschichten unter Zuhilfenahme einer Matrize über- oder nebeneinander geschichtet, wobei die Matrize derart ausgebildet ist, dass sie ein Verrutschen der Holzschichten verhindert.

Durch Zuhilfenahme einer Matrize wird ein Verrutschen der Holzschichten während des Verleimens verhindert, so dass die gewünschte Präzision gewährleistet werden kann.

Ein weiterer Aspekt der Erfindung betrifft ein Verfahren zur Herstellung eines erfindungsgemäßen mehrschichtigen Holzfurniers, umfassend das Auftrennen eines mehrschichtigen Holzkompositblocks gemäß einem der Ansprüche 1 bis 4 zu mehrschichtigen Holzfurnieren.

Bevorzugt wird der Holzkompositblock zu mehrschichtigem Holzfurnier gesägt.

Sägen von Furnieren erfordert im Gegensatz zum Messern keine Vorbehandlung wie Wässern und/ oder Dämpfen des Holzkompositblocks. Folglich ist der Holzkompositblock keinen Temperatur- und/ oder Feuchtigkeitsschwankungen ausgesetzt, die zur Verformung und/ oder Verfärbung des Kompositblocks beziehungsweise der einzelnen Furnierblätter führen könnten. Aufgrund der Tatsache, dass eine thermische Vorbehandlung des mehrschichtigen Holzkompositblocks nicht erforderlich ist, ist die Auswahl verwendbarer Klebstoffe weniger eingeschränkt als beim herkömmlichen Messerverfahren. Durch diese erweiterte Auswahl sind auch Klebstoffe einsetzbar, die besonders vorteilhafte Klebeeigenschaften in Bezug auf unterschiedliche, d.h. nicht nur für Holz, sondern auch für die als Zwischenschichten verwendeten Materialien, aufweisen. Somit bietet das erfindungsgemäße Verfahren mehr Gestaltungsspielraum mit Blick auf mögliche Materialkombinationen und entsprechend zugängliche Designs.

Zudem bietet das Sägen den Vorteil, dass Rissbildung vermieden wird und ein breiteres Spektrum an Materialien bei der Herstellung der mehrschichtigen Furniere eingesetzt werden kann; sehr harte Materialien wie beispielsweise Eisenholz, das heißt verschiedene Tropenhölzer, Metalle und harte Kunststoffe, können zwar gesägt, nicht aber gemessert werden.

Der Holzkompositblock wird zum Auftrennen zu mehrschichtigen Holzfurnieren gesägt, wobei das Sägen vorzugsweise mit einer Bandsäge, beispielsweise einer Horizontalbandsäge erfolgt.

Gemäß einer Weiterbildung der Erfindung erfolgt das Auftrennen des Holzkompositblocks mit einem Winkel von 0° bis 180° zu Schneidflächen der Holzschichten, insbesondere mit einem Winkel zwischen 45° und 135° zu Schneidflächen der Holzschichten. Besonders bevorzugt erfolgt das Auftrennen des Holzkompositblocks senkrecht zur Schneidfläche der Holzschichten.

Der erfindungsgemäße Holzkompositblock bleibt während der gesamten Bearbeitung trocken, das heißt es wird weder ein wasser- beziehungsweise lösemittelbasierter Klebstoff verwendet, noch wird der Holzkompositblock gewässert oder bedampft.

Um die Präzision der fertigen mehrschichtigen Holzfurniere zu gewährleisten ist es unerlässlich, dass stets auf den Holzfeuchtebereich des Holzkompositblocks beziehungsweise der einzelnen Komponenten geachtet wird.

Der Holzkompositblock weist eine Holzfeuchte kleiner gleich 20%, bevorzugt kleiner gleich 18%, bevorzugter kleiner gleich 15%, noch bevorzugter zwischen 6 und 15% auf.

Die Messung der Holzfeuchte erfolgt mittels eines handelsüblichen Messgeräts (Gann Hydromette, H35-M20), welches die Holzfeuchte auf Basis des elektrischen Widerstands ermittelt (DIN EN 13183-2:2002-07 mit DIN EN 13183-2 Berichtigung 1: 2003-12).

Alternativ kann die Holzfeuchte auch mittels Darrprobe bestimmt werden (DIN EN 13183-1:2002-07 mit DIN EN 13183-1 Berichtigung 1: 2003-12).

Der mehrschichtige Holzkompositblock wird durch Sägen oder Messern, bevorzugt durch Sägen oder Messern im trockenen Zustand, noch bevorzugter durch Sägen im trockenen Zustand, zu mehrschichtigen Holzfurnieren mit einer Stärke im Bereich von 0,2 und 4,0 mm, bevorzugt zwischen 0,3 und 1,5 mm, bevorzugter zwischen 0,5 und 1,0 mm und noch bevorzugter zwischen 0,6 und 0,9 mm aufgetrennt, wobei die Stärke des mehrschichtigen Holzfurniers eine Toleranz von kleiner oder gleich 0,25 mm, bevorzugt kleiner oder gleich 0,20 mm und bevorzugter kleiner oder gleich 0,15 mm aufweist.

Die oben gemachten Angaben zum erfindungsgemäßen Holzfurnier haben entsprechend auch für das Verfahren zur Herstellung des mehrschichtigen Holzfurniers Geltung.

Ein weiterer Aspekt der Erfindung betrifft ein mehrschichtiges Holzfurnier erhältlich durch das Verfahren gemäß Ansprüchen 11 oder 12.

Die technischen Effekte beziehungsweise Vorteile eines solchen, erfindungsgemäßen Holzfurniers sind analog zu den für das Verfahren und das vorhergehende Holzfurnier beschriebenen.

Ein weiterer Aspekt der Erfindung betrifft die Verwendung eines mehrschichtigen Holzfurniers gemäß einem der Ansprüche 5 bis 8 oder 13 als Dekor- und/ oder Verkleidungselement.

Das erfindungsgemäße Holzfurnier kann zudem als Dekor- und/ oder Verkleidungselement im Möbelbau, im Innenausbau, in Gebrauchsgegenstände wie beispielsweise Mobiltelefone und entsprechende Schutzhüllen, aber auch im Bereich von Textil- und Lederwaren eingesetzt werden.

Bevorzugt findet das erfindungsgemäße, mehrschichtige Holzfurnier Verwendung als Dekor- und/ oder Verkleidungselement in einem Fahrzeuginnenraum.

Gegenüber dem Stand der Technik eröffnet die erfindungsgemäße Verwendung eines mehrschichtigen Holzfurniers, wie oben beschrieben, neue Möglichkeiten. Dies ist einerseits darauf zurückzuführen, dass die Furniere aufgrund ihrer geringen Stärke deutlich flexibler sind als herkömmliche Sägefurniere, andererseits sind die zugänglichen Designs mit außergewöhnlicher Präzision reproduzierbar. Zusätzlich erlauben die Art des Holzkompositaufbaus und das erfindungsgemäße Verfahren zur Herstellung der Furniere, insbesondere das Verfahren zur Herstellung mittels Sägen im trockenen Zustand, die Verwendung von Materialien in Ausführungen und Stärken, die für die Furnierherstellung mittels Messern nicht verwendbar sind. In Folge dessen erweitert die vorliegende Erfindung den Gestaltungsspielraum bei der Furnierherstellung und macht neue Designs zugänglich, die mit den bisherigen technischen Mitteln nicht herstellbar sind.

Ein weiterer Aspekt der Erfindung betrifft einen Artikel umfassend ein mehrschichtiges Holzfurnier gemäß einem der Ansprüche 5 bis 8 oder 13.

Die Vorteile gegenüber dem Stand der Technik entsprechen denen wie im Zusammenhang mit der Verwendung des Holzfurniers beschrieben.

Die Erfindung wird nachstehend anhand der Beschreibung von Ausführungsbeispielen und unter Bezugnahme auf die beiliegenden, schematischen Zeichnungen näher erläutert. Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.
- **Fig.** 1: schematische Darstellung eines erfindungsgemäßen, mehrschichtigen Holzkompositblocks;
- **Fig.** 2: schematische Darstellung eines erfindungsgemäßen, mehrschichtigen Holzfurniers;
- **Fig. 3a - 3d**: schematische Darstellung verschiedener Schichtanordnungen in erfindungsgemäßen Holzkompositblöcken beziehungsweise - furnieren

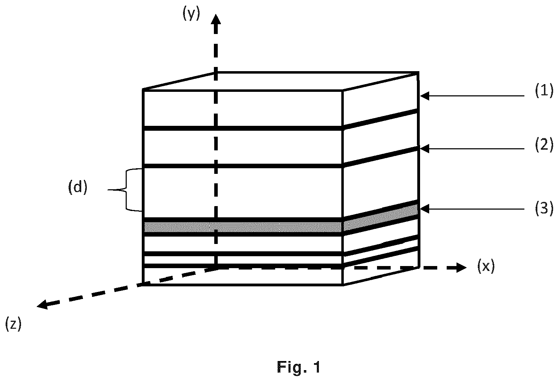

**Figur 1** zeigt einen erfindungsgemäßen Holzkompositblock. Der dargestellte Holzkompositblock umfasst eine Mehrzahl an Holzschichten (1), eine Mehrzahl an Klebeschichten (2) und eine (optionale) Zwischenschicht (3). Jede der Schichten (1), (2) und (3) weist eine Dicke (d) auf, wobei (d) sowohl für jede Schichtart (1), (2) und (3), als auch für jede einzelne Schicht (1a), (1b), (1c) unabhängig von der Dicke (d) der anderen Schichten gewählt sein kann.

Zwischen zwei Holzschichten (1) kann lediglich eine Klebeschicht (2) vorgesehen sein, über die die Holzschichten (1) miteinander verklebt sind. Diese Klebeschicht (2) bildet dann im fertigen mehrschichtigen Holzfurnier ein sichtbares Linienelement. Optional kann die Klebeschicht (2) eingefärbt werden, um weitere Designalternativen zugänglich zu machen.

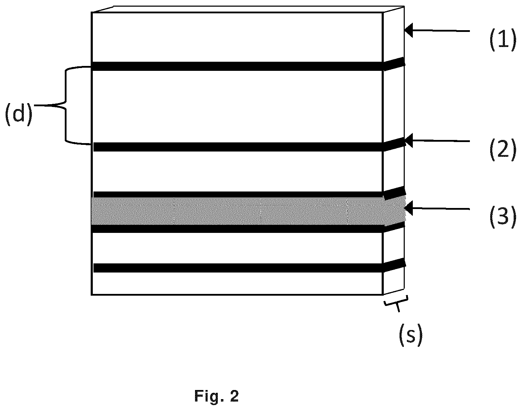

**Fig. 2** zeigt schematisch ein erfindungsgemäßes Holzfurnier. Das dargestellte Holzfurnier umfasst eine Mehrzahl an Holzschichten (1) mit einer Dicke (d), eine Mehrzahl an Klebeschichten (2) mit einer Dicke (d), sowie eine (optionale) Zwischenschicht (3) mit einer Dicke (d), wobei die Dicke (d) für jede einzelne der Holzschichten (1), Klebeschichten (2) und Zwischenschicht(en) (3), aus der Mehrzahl an Schichten unabhängig gewählt werden kann.

Das Holzfurnier hat eine Stärke (s) im Bereich von 0,2 bis 4,0mm, bevorzugt zwischen 0,3 und 1,5mm, bevorzugter zwischen 0,5 und 1,0mm und noch bevorzugter zwischen 0,6 und 0,9mm; wobei die Stärke des mehrschichtigen Holzfurniers eine Toleranz von kleiner oder gleich 0,25mm, bevorzugt kleiner oder gleich 0,20mm und bevorzugter kleiner oder gleich 0,15mm aufweist.

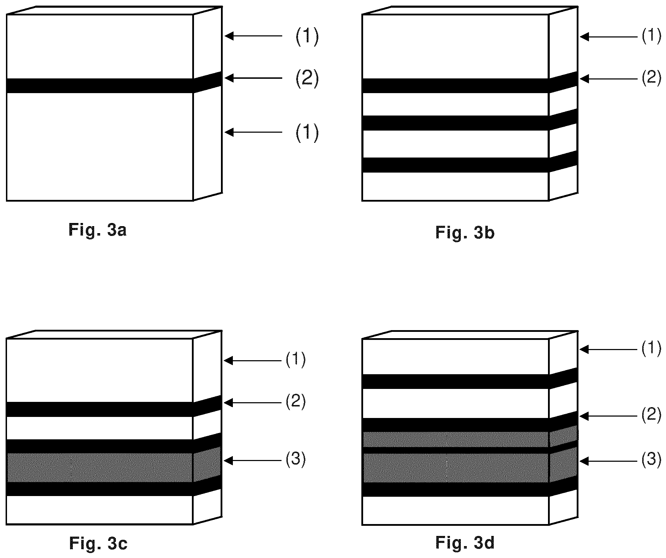

**Fig. 3a** - **3d** zeigen schematisch verschiedene, mögliche Anordnungen der Holzschichten (1), Klebeschichten (2) und Zwischenschichten (3) in erfindungsgemäßen Holzkompositblöcken beziehungsweise -furnieren.

**Fig. 3a** zeigt die einfachste, erfindungsgemäße Variante, umfassend eine Mehrzahl, hier zwei, von überlagerten Holzschichten (1) und wenigstens eine Klebeschicht (2), wobei die wenigstens eine Klebeschicht (2) zwischen aufeinanderfolgenden Holzschichten (1) angeordnet ist.

**Fig. 3b** zeigt eine erfindungsgemäße Variante, umfassend eine Mehrzahl von überlagerten Holzschichten (1) sowie eine Mehrzahl von Klebeschichten (2), wobei jede der Klebeschichten (2) zwischen zwei aufeinanderfolgenden Holzschichten (1) angeordnet ist.

**Fig. 3c** zeigt eine erfindungsgemäße Variante, umfassend eine Mehrzahl von überlagerten Holzschichten (1), eine Mehrzahl von Klebeschichten (2), sowie eine Zwischenschicht (3), die zwischen zwei Holzschichten (1) derart eingelegt ist, dass sie über zwei Klebeschichten (2) mit den Holzschichten (1) verbunden ist. Anders ausgedrückt ist die Zwischenschicht (3) in einer Klebeschicht (2) eingebettet, die zwei Holzschichten (1) miteinander verbindet. Die Zwischenschicht (3) bildet im mehrschichtigen Holzfurnier ein Linienelement.

**Fig. 3d** zeigt eine erfindungsgemäße Variante, umfassend eine Mehrzahl von überlagerten Holzschichten (1), eine Mehrzahl von Klebeschichten (2), sowie eine Mehrzahl von Zwischenschicht (3). Wie in der Figur dargestellt, kann eine Zwischenschicht (3) in einer Klebeschicht (2) eingebettet sein, die zwei Holzschichten (1) miteinander verbindet. Alternativ können auch mehrere Zwischenschichten (3) in einer Klebeschicht (2) eingebettet sein, die zwei Holzschichten (1) miteinander verbindet. Anzahl und Dicke (d) der Schichten (1), (2) und (3) in einem erfindungsgemäßen Holzkompositblock oder -furnier sind frei wählbar.

### Bezugszeichenliste

(1) : Holzschicht
(2) : Klebeschicht
(3) : Zwischenschicht
(d) : Schichtdicke
(s) : Stärke
(x) : Breite
(y) : Höhe
(z) : Tiefe

## Patentansprüche

1. Mehrschichtiger Holzkompositblock, umfassend
- eine Mehrzahl von überlagerten Holzschichten, und
- wenigstens eine Klebeschicht,
wobei die wenigstens eine Klebeschicht zwischen aufeinanderfolgenden Holzschichten angeordnet ist,
wobei die wenigstens eine Klebeschicht, im ausgehärteten Zustand, eine Härte zwischen 70 und 100 Shore A, bestimmt gemäß DIN EN ISO 868, und eine Härte von zwischen 20 und 60 Shore D, bestimmt gemäß DIN EN ISO 868, aufweist, und
wobei der mehrschichtige Holzkompositblock eine Gesamtkohlenstoffemission (TVOC) von weniger oder gleich 50 µg Kohlenstoff/ g ermittelt gemäß VDA 277, aufweist.

2. Mehrschichtiger Holzkompositblock gemäß Anspruch 1,
wobei der Holzkompositblock
a) einen Gehalt von leichtflüchtigen Kohlenwasserstoffen (VOC) von weniger oder gleich 100 mg/kg und schwererflüchtigen Kohlenwasserstoffen (FOG) von weniger oder gleich 250 mg/kg ermittelt gemäß VDA 278, und/ oder
b) einen Formaldehydemissionswert von weniger oder gleich 3 mg/kg ermittelt gemäß VDA 275,
aufweist; und/oder
wobei der Holzkompositblock eine Mehrzahl von Klebeschichten umfasst.

3. Mehrschichtiger Holzkompositblock gemäß einem der vorhergehenden Ansprüche,
wobei die wenigstens eine Klebeschicht einfärbbar ist; und/oder
wobei die wenigstens eine Klebeschicht temperaturbeständig bis 180°C ist; und/oder
wobei der Holzkompositblock mindestens eine Zwischenschicht umfasst, und wobei die mindestens eine Zwischenschicht zwischen zwei Holzschichten angeordnet ist.

4. Mehrschichtiger Holzkompositblock gemäß Anspruch 3,
wobei die mindestens eine Zwischenschicht aus Metall, Textil, Kunststoff, Leder, Vlies, Stein, Filz, gepresstem Papier, Mineralwerkstoff, mitteldichten (Holz)Faserplatten (MDF) oder Kombinationen daraus besteht.

5. Mehrschichtiges Holzfurnier umfassend,
- eine Mehrzahl von überlagerten Holzschichten, und
- wenigstens eine Klebeschicht,
wobei die wenigstens eine Klebeschicht zwischen aufeinanderfolgenden Holzschichten angeordnet ist und
wobei die wenigstens eine Klebeschicht, im ausgehärteten Zustand, eine Härte zwischen 70 und 100 Shore A, bestimmt gemäß DIN EN ISO 868, und eine Härte zwischen 20 und 60 Shore D, bestimmt gemäß DIN EN ISO 868, aufweist und
wobei das mehrschichtige Holzfurnier eine Gesamtkohlenstoffemission (TVOC) von weniger oder gleich 50 µg Kohlenstoff/ g ermittelt gemäß VDA 277, aufweist.

6. Mehrschichtiges Holzfurnier gemäß Anspruch 5,
wobei das Holzfurnier
a) einen Gehalt von leichtflüchtigen Kohlenwasserstoffen (VOC) von weniger oder gleich 100 mg/kg und schwererflüchtigen Kohlenwasserstoffen (FOG) von weniger oder gleich 250 mg/kg ermittelt gemäß VDA 278, und/ oder
b) einen Formaldehydemissionswert von weniger oder gleich 3 mg/kg ermittelt gemäß VDA 275,
aufweist; und/oder
wobei das mehrschichtige Holzfurnier eine Stärke zwischen 0,2 und 4,0 mm, bevorzugt zwischen 0,3 und 1,5 mm, bevorzugter zwischen 0,5 und 1,0 mm und noch bevorzugter zwischen 0,6 und 0,9 mm aufweist; und/oder
wobei das Holzfurnier eine Mehrzahl von Klebeschichten umfasst.

7. Mehrschichtiges Holzfurnier gemäß einem der Ansprüche 5 oder 6,
wobei die wenigstens eine Klebeschicht einfärbbar ist; und/oder
wobei die wenigstens eine Klebeschicht temperaturbeständig bis 180°C ist; und/oder
wobei das Holzfurnier mindestens eine Zwischenschicht umfasst, und wobei die mindestens eine Zwischenschicht zwischen zwei Holzschichten angeordnet ist.

8. Mehrschichtiges Holzfurnier gemäß Anspruch 7,
wobei die mindestens eine Zwischenschicht aus Metall, Textil, Kunststoff, Leder, Vlies, Stein, Filz, gepresstem Papier, Mineralwerkstoff, mitteldichten (Holz)Faserplatten (MDF) oder Kombinationen daraus besteht.

9. Verfahren zur Herstellung eines mehrschichtigen Holzkompositblocks gemäß einem der Ansprüche 1 bis 4, umfassend die Schritte:
a) Bereitstellen einer Mehrzahl von trockenen Holzschichten;
b) Trockenverleimen der trockenen Holzschichten miteinander.

10. Verfahren zur Herstellung eines mehrschichtigen Holzkompositblocks gemäß Anspruch 9, wobei die einzelnen Holzschichten unter Zuhilfenahme einer Matrize über- und/oder nebeneinander geschichtet werden, wobei die Matrize derart ausgebildet ist, dass sie ein Verrutschen der Holzschichten verhindert.

11. Verfahren zur Herstellung eines mehrschichtigen Holzfurniers, umfassend das Auftrennen eines mehrschichtigen Holzkompositblocks gemäß einem der Ansprüche 1 bis 4 zu mehrschichtigen Holzfurnieren.

12. Verfahren zur Herstellung eines mehrschichtigen Holzfurniers gemäß Anspruch 11,
wobei der Holzkompositblock zu mehrschichtigem Holzfurnier gesägt oder gemessert, bevorzugt gesägt, wird; und/oder
wobei die Verarbeitung, insbesondere das Auftrennen des mehrschichtigen Holzkompositblocks, im trockenen Zustand stattfindet.

13. Mehrschichtiges Holzfurnier erhältlich durch das Verfahren zur Herstellung eines mehrschichtigen Holzfurniers gemäß einem der Ansprüche 11 oder 12.

14. Verwendung eines mehrschichtigen Holzfurniers gemäß einem der Ansprüche 5 bis 8 oder 13 als Dekor- und/ oder Verkleidungselement, bevorzugt als Dekor- und/oder Verkleidungselement in einem Fahrzeuginnenraum.

15. Artikel umfassend ein mehrschichtiges Holzfurnier gemäß einem der Ansprüche 5 bis 8 oder 13.

## Claims

1. A multi-layer wood composite block comprising
a plurality of superimposed layers of wood, and
at least one adhesive layer,
wherein the at least one adhesive layer is arranged between successive layers of wood,
wherein the at least one adhesive layer, in the cured state, has a hardness of between 70 and 100 Shore A, determined according to DIN EN ISO 868, and a hardness of between 20 and 60 Shore D, determined according to DIN EN ISO 868, and
wherein the multi-layer wood composite block has a total carbon emission (TVOC) of less than or equal to 50 µg carbon/g determined according to VDA 277.

2. The multi-layer wood composite block according to claim 1,
wherein the wood composite block has
a) a content of light volatile hydrocarbons (VOC) of less than or equal to 100 mg/kg and of heavier volatile hydrocarbons (FOG) of less than or equal to 250 mg/kg determined according to VDA 278, and/or
b) a formaldehyde emission value of less than or equal to 3 mg/kg determined according to VDA 275;
and/or
wherein the wood composite block comprises a plurality of adhesive layers.

3. The multi-layer wood composite block according to any one of the preceding claims,
wherein the at least one adhesive layer can be colored; and/or
wherein the at least one adhesive layer is temperature-resistant up to 180°C; and/or
wherein the wood composite block comprises at least one intermediate layer, and wherein the at least one intermediate layer is located between two layers of wood.

4. The multi-layer wood composite block according to claim 3, wherein the at least one intermediate layer consists of metal, textile, plastic, leather, fleece, stone, felt, pressed paper, mineral material, medium-density (wood) fiberboard (MDF) or combinations thereof.

5. A multi-layer wood veneer comprising,
a plurality of superimposed layers of wood, and
at least one adhesive layer,
wherein the at least one adhesive layer is arranged between successive layers of wood, and
wherein the at least one adhesive layer, in the cured state, has a hardness of between 70 and 100 Shore A, determined according to DIN EN ISO 868, and a hardness of between 20 and 60 Shore D, determined according to DIN EN ISO 868, and
wherein the multi-layer wood veneer has a total carbon emission (TVOC) of less than or equal to 50 µg carbon/g determined according to VDA 277.

6. The multi-layer wood veneer according to claim 5,
wherein the wood veneer has
a) a content of light volatile hydrocarbons (VOC) of less than or equal to 100 mg/kg and of heavier volatile hydrocarbons (FOG) of less than or equal to 250 mg/kg determined according to VDA 278, and/or
b) a formaldehyde emission value of less than or equal to 3 mg/kg determined according to VDA 275;
and/or
wherein the multi-layer wood veneer has a thickness between 0.2 and 4.0 mm, preferably between 0.3 and 1.5 mm, more preferably between 0.5 and 1.0 mm and even more preferably between 0.6 and 0.9 mm; and/or
wherein the wood veneer comprises a plurality of adhesive layers.

7. The multi-layer wood veneer according to any one of claims 5 or 6,
wherein the at least one adhesive layer can be colored; and/or wherein the at least one adhesive layer is temperature-resistant up to 180°C; and/or
wherein the wood veneer comprises at least one intermediate layer, and
wherein the at least one intermediate layer is arranged between two layers of wood.

8. The multi-layer wood veneer according to claim 7,
wherein the at least one intermediate layer consists of metal, textile, plastic, leather, fleece, stone, felt, pressed paper, mineral material, medium-density (wood) fiberboard (MDF) or combinations thereof.

9. A method for producing a multi-layer wood composite block according to any one of claims 1 to 4, comprising the steps of:
a) providing a plurality of dry layers of wood;
b) dry gluing the dry layers of wood together.

10. The method for producing a multi-layer wood composite block according to claim 9, wherein the individual wood layers are stacked on top of and/or next to each other with the aid of a matrix, wherein the matrix is designed in such a way that it prevents the wood layers from slipping.

11. A method for producing a multi-layer wood veneer, comprising separating a multi-layer wood composite block according to any one of claims 1 to 4 into multi-layer wood veneers.

12. The method for producing a multi-layer wood veneer according to claim 11,
wherein the wood composite block is sawn or sliced, preferably sawn, into a multi-layer wood veneer; and/or
wherein the processing, in particular the separating of the multi-layer wood composite block, takes place in the dry state.

13. A multi-layer wood veneer obtainable by the method for producing a multi-layer wood veneer according to any one of claims 11 or 12.

14. Use of a multi-layer wood veneer according to any one of claims 5 to 8 or 13 as a decorative and/or cladding element, preferably as a decorative and/or cladding element in a vehicle interior.

15. An article comprising a multi-layer wood veneer according to any one of claims 5 to 8 or 13.

## Revendications

1. Bloc composite de bois multicouche comprenant
- une pluralité de couches de bois superposées, et
- au moins une couche adhésive,
dans lequel l'au moins une couche adhésive est disposée entre des couches successives de bois,
dans lequel l'au moins une couche adhésive, à l'état durci, a une dureté comprise entre 70 et 100 Shore A, déterminée selon la norme DIN EN ISO 868, et une dureté comprise entre 20 et 60 Shore D, déterminée selon la norme DIN EN ISO 868, et
dans lequel le bloc composite de bois multicouche a une émission totale de carbone (TVOC) inférieure ou égale à 50 µg carbone/g déterminée selon VDA 277.

2. Bloc composite de bois multicouche selon la revendication 1, dans lequel le bloc composite de bois a
a) une teneur en hydrocarbures volatils (VOC) inférieure ou égale à 100 mg/kg et en hydrocarbures moins volatils (FOG) inférieure ou égale à 250 mg/kg déterminée selon VDA 278, et/ou
b) une valeur d'émission de formaldéhyde inférieure ou égale à 3 mg/kg déterminée selon VDA 275,
; et/ou
dans lequel le bloc composite de bois comprend une pluralité de couches adhésives.

3. Bloc composite de bois multicouche selon l'une des revendications précédentes,
dans lequel l'au moins une couche adhésive peut être colorée ; et/ou
dans lequel l'au moins une couche adhésive est résistante à la température jusqu'à 180°C ; et/ou
dans lequel le bloc composite de bois comprend au moins une couche intermédiaire, et dans lequel l'au moins une couche intermédiaire est disposée entre deux couches de bois.

4. Bloc composite de bois multicouche selon la revendication 3, dans lequel l'au moins une couche intermédiaire est constituée de métal, textile, plastique, cuir, non-tissé, pierre, feutre, papier pressé, matériau minéral, panneau de fibres (de bois) à densité moyenne (MDF) ou leurs combinaisons.

5. Placage de bois multicouche comprenant
- une pluralité de couches de bois superposées, et
- au moins une couche adhésive,
dans lequel l'au moins une couche adhésive est disposée entre des couches successives de bois, et
dans lequel l'au moins une couche adhésive, à l'état durci, a une dureté comprise entre 70 et 100 Shore A, déterminée selon la norme DIN EN ISO 868, et une dureté comprise entre 20 et 60 Shore D, déterminée selon la norme DIN EN ISO 868, et
dans lequel le placage de bois multicouche a une émission totale de carbone (TVOC) inférieure ou égale à 50 µg carbone/g déterminée selon VDA 277.

6. Placage de bois multicouche selon la revendication 5,
dans lequel le placage de bois a
a) une teneur en hydrocarbures volatils (VOC) inférieure ou égale à 100 mg/kg et en hydrocarbures moins volatils (FOG) inférieure ou égale à 250 mg/kg déterminée selon VDA 278, et/ou
b) une valeur d'émission de formaldéhyde inférieure ou égale à 3 mg/kg déterminée selon VDA 275,
; et/ou
dans lequel le placage de bois multicouche a une épaisseur comprise entre 0,2 et 4,0 mm, de préférence entre 0,3 et 1,5 mm, de manière davantage préférée entre 0,5 et 1,0 mm et de manière encore davantage préférée entre 0,6 et 0,9 mm ; et/ou
dans lequel le placage de bois comprend une pluralité de couches adhésives.

7. Placage de bois multicouche selon l'une des revendications 5 ou 6,
dans lequel l'au moins une couche adhésive peut être colorée ; et/ou
dans lequel l'au moins une couche adhésive est résistante à la température jusqu'à 180°C ; et/ou
dans lequel le placage de bois comprend au moins une couche intermédiaire, et
dans lequel l'au moins une couche intermédiaire est disposée entre deux couches de bois.

8. Placage de bois multicouche selon la revendication 7,
dans lequel l'au moins une couche intermédiaire est constituée de métal, textile, plastique, cuir, non-tissé, pierre, feutre, papier pressé, matériau minéral, panneau de fibres (de bois) à densité moyenne (MDF) ou leurs combinaisons.

9. Procédé de fabrication d'un bloc composite de bois multicouche selon l'une des revendications 1 à 4, comprenant les étapes de :
a) fourniture d'une pluralité de couches sèches de bois ;
b) collage à sec des couches sèches de bois entre elles.

10. Procédé de fabrication d'un bloc composite de bois multicouche selon la revendication 9, dans lequel les couches de bois individuelles sont empilées les unes sur les autres et/ou les unes à côté des autres à l'aide d'une matrice, dans lequel la matrice est conçue de manière à empêcher les couches de bois de glisser.

11. Procédé de fabrication d'un placage de bois multicouche, comprenant la séparation d'un bloc composite de bois multicouche selon l'une des revendications 1 à 4 en placages de bois multicouche.

12. Procédé de fabrication d'un placage de bois multicouche selon la revendication 11,
dans lequel le bloc composite de bois est scié ou tranché, de préférence scié, en un placage de bois multicouche ; et ou
dans lequel le traitement, en particulier la séparation du bloc composite de bois multicouche, a lieu à l'état sec.

13. Placage de bois multicouche pouvant être obtenu par le procédé de fabrication d'un placage de bois multicouche selon l'une des revendications 11 ou 12.

14. Utilisation d'un placage de bois multicouche selon l'une des revendications 5 à 8 ou 13 comme élément de décoration et/ou d'habillage,
de préférence comme élément de décoration et/ou d'habillage dans un habitacle de véhicule.

15. Article comprenant un placage de bois multicouche selon l'une des revendications 5 à 8 ou 13.
